# FASCICULE DE BREVET EUROPEEN

(11) **EP 3 934 978 B1**
(45) Date de publication et mention de la délivrance du brevet: **07.06.2023**
(21) Numéro de dépôt: 20707653.0
(22) Date de dépôt: 03.03.2020
(51) Int. Cl.: B64C 1/14

(54) **PORTE DE CABINE PRESSURISÉE D'AÉRONEF À ARMATURE INTÉRIEURE DE REPRISE D'EFFORTS**
FLUGZEUGDRUCKKABINENTÜR MIT INNEREM KRAFTABSORPTIONSRAHMEN
AIRCRAFT PRESSURISED CABIN DOOR WITH INTERNAL FORCE-ABSORBING FRAME

(30) Priorité: 06.03.2019 FR 1902276
(43) Date de publication de la demande: 12.01.2022
(73) Titulaire: Latecoere, 31500 Toulouse, Occitanie (FR)
(72) Inventeur: DEVILLEZ, Sébastien, 31240 SAINT JEAN (FR)
(74) Mandataire: Junca, Eric
(86) Numéro de dépôt international: PCT/EP2020/055554
(87) Numéro de publication internationale: WO 2020/178283

(56) Documents cités:
- CN-A- 106 672 200
- CN-A- 109 229 331
- US-A- 4 720 065
- US-A1- 2002 008 179
- US-A1- 2002 043 588

## Description

### DOMAINE TECHNIQUE

L'invention a trait au domaine de l'aéronautique et concerne une porte de cabine pressurisée d'aéronef.

Les aéronefs, et en particulier les avions, sont généralement équipés de portes permettant aux personnes et au matériel d'entrer et de sortir de la cabine. La cabine étant pressurisée, ces portes doivent garantir, durant le vol, la fermeture de la cabine et le maintien d'une importante différence de pression entre l'intérieur de la cabine et l'extérieur. Les portes de cabine pressurisée comportent pour cela un panneau de fuselage, également dénommé « peau », qui, lorsque la porte est fermée, se place dans la continuité du fuselage de l'aéronef et qui agit comme une barrière pour le maintien de la différence de pression. Pour que ce panneau de fuselage puisse présenter une épaisseur acceptable malgré les importantes contraintes dues à la différence de pression, la porte comporte également une structure de porte formée de poutres fixées sur le panneau de fuselage pour assurer la rigidité de ce dernier. Cette structure est reliée au fuselage lorsque la porte est fermée, généralement par l'intermédiaire de butées dans le cas de portes dont la charge due à la pression est reprise directement par contact de la structure de porte avec la structure du fuselage.

Par ailleurs, les portes de cabine sont aussi généralement le support de divers équipements tels que des mécanismes d'ouverture de porte ou des équipements de confort et de sécurité. La structure de porte, en plus d'assurer la rigidité de la porte, doit également être dimensionnée pour supporter ces masses supplémentaires, qui peuvent être conséquentes.

Les portes de cabine pressurisée sont un élément critique de la sécurité d'un aéronef car elles sont garantes du maintien de la pression à l'intérieur de la cabine. Les panneaux de porte et les structures de porte associées sont donc dimensionnées pour un haut niveau de sécurité.

### ART ANTÉRIEUR

La demande de brevet FR2928620 décrit une porte de cabine d'avion dont la structure de porte comprend des poutres transversales et des longerons se croisant pour former une structure rigide. Les poutres transversales et les longerons sont des profilés de type IPN. Dans l'exemple décrit par ce document, quatre longerons et six poutres transversales se croisent à angle droit et sont fixés les uns aux autres, formant ainsi une structure d'une grande rigidité.

Une telle structure de porte est difficile et coûteuse à fabriquer en raison notamment des liaisons à réaliser au niveau des croisements entre les longerons et les poutres transversales. Ces liaisons requièrent des fixations, des pièces supplémentaires ou des liaisons complexes et entraine aussi des augmentations de masse.

Par ailleurs, le croisement entre les poutres transversales et les longerons rend difficile la fabrication de cette porte en matériaux composites pour lesquels la réalisation de telles intersections génère une difficulté supplémentaire en assemblage ou en moulage.

La demande de brevet US2007007390 se propose de résoudre certains des inconvénients indiqués ci-dessus en proposant une porte d'avion monolithique réalisée d'une pièce. De fortes nervures de renfort se croisent à angle droit sur toute la surface interne de la porte. Une telle porte présente également une rigidité conséquente, propre à son utilisation en aéronautique, mais reste d'une complexité et d'un cout de réalisation important. Sa masse est également conséquente.

La demande de brevet US2009/0078826 décrit une porte de cabine pressurisée réalisée en matériaux composites et dont la conception est optimisée pour l'usage de ces matériaux composites. La porte comprend des poutres disposées à angle droit les unes des autres mais ne se croisant pas. Le procédé de fabrication d'une telle porte est simplifié par rapport aux procédés évoqués ci-dessus et la réalisation en matériaux composites est facilitée. Cependant, le support de la peau d'une telle porte implique la présence de surfaces cachées qui complexifient l'installation de supports d'équipements et des pièces d'interface avec le fuselage.

Les demandes de brevet US4720065 et US2002/043588 décrivent une porte d'aéronef comprenant deux poutres circonférentielles disposées sur les rebords latéraux de la porte et une pluralité de poutres longitudinales disposées entre les poutres circonférentielles.

La demande de brevet CN109229331 décrit un panneau léger pour aéronef comportant une structure de renfort.

### EXPOSÉ DE L'INVENTION

L'invention vise à améliorer les portes de cabine pressurisée d'aéronef, en proposant une telle porte qui allie une importante rigidité permettant son emploi pour des aéronefs volant en altitude, à une simplicité de réalisation qui permet une fabrication rapide et à moindre cout, et qui permet sa réalisation par tout procédé et matériaux, incluant les matériaux composites.

À cet effet, l'invention vise une porte de cabine pressurisée d'aéronef, comportant un panneau de fuselage et une structure de porte qui comprend :
- deux poutres circonférentielles disposées sur les rebords latéraux de la porte ;
- une pluralité de poutres longitudinales disposées entre les poutres circonférentielles selon une direction longitudinale, chaque poutre longitudinale s'étendant d'une poutre circonférentielle à l'autre, le panneau de fuselage étant fixé sur les poutres longitudinales. Chaque poutre longitudinale est un profilé ouvert présentant une face extérieure sur laquelle est fixé le panneau de fuselage et une face intérieure, tournée vers l'intérieur de la cabine, la face intérieure et la face extérieure étant sensiblement parallèles, la structure de porte comportant en outre une armature intérieure de reprise d'efforts fixée sur la face intérieure de chaque poutre longitudinale.

La porte de cabine pressurisée peut comporter les caractéristiques additionnelles suivantes, seules ou en combinaison :
- l'armature intérieure de reprise d'efforts relie la face intérieure de chaque poutre longitudinale à la face intérieure de la poutre longitudinale voisine ;
- les deux poutres circonférentielles sont des profilés ouverts présentant une face extérieure sur laquelle est fixé le panneau de fuselage et une face intérieure, tournée vers l'intérieur de la cabine, la face intérieure et la face extérieure étant sensiblement parallèles ;
- les poutres longitudinales et les poutres circonférentielles comportent chacune une âme, l'âme des poutres longitudinales étant fixée à l'âme des poutres circonférentielles ;

- la porte comprend une liaison mécanique entre chaque extrémité des poutres longitudinales et une poutre circonférentielle ;
- l'armature intérieure de reprise d'efforts relie la face intérieure de chaque poutre longitudinale à la face intérieure d'une poutre circonférentielle ;
- l'armature intérieure de reprise d'efforts comporte une pluralité de montants s'étendant chacun en vis-à-vis d'une poutre circonférentielle, chaque montant étant fixé sur plusieurs poutres longitudinales ;
- chacun des montants comporte une pluralité de tirants s'étendant chacun suivant une direction oblique par rapport à la direction longitudinale ;
- la direction oblique forme un angle compris entre 30° et 60° avec la direction longitudinale ;
- les tirants sont disposés en dents de scie ;
- les tirants comportent chacun une première zone d'extrémité et une deuxième zone d'extrémité, les tirants étant reliés entre eux deux à deux de sorte que :
   - deux tirants sont reliés par leur première zone d'extrémité contre la poutre circonférentielle en vis-à-vis de laquelle s'étend le montant correspondant ;
   - deux tirants sont reliés par leur deuxième zone d'extrémité à une distance de la poutre circonférentielle en vis-à-vis de laquelle s'étend le montant correspondant ;
- chacun des tirants s'étend entre un point de fixation sur une poutre longitudinale et un autre point de fixation sur une poutre circonférentielle ;
- chacun des tirants s'étend entre un point de fixation sur une poutre longitudinale et un autre point de fixation sur une poutre longitudinale voisine ;
- l'armature intérieure de reprise d'efforts comporte une pluralité de corniches comportant chacune un premier rebord fixé à l'une des poutres circonférentielles et un deuxième rebord ondulé ;
- les corniches présentent chacune une succession de zones de bosses et de zones de creux fixées en alternance sur la face intérieure des poutres longitudinales ;
- les poutres circonférentielles comportent une face intérieure formant les corniches ;
- la structure de porte comprend un premier ensemble de poutres longitudinales et un deuxième ensemble de poutres longitudinales, les poutres longitudinales étant espacées d'un pas identique dans chacun de ces ensembles ;
- les poutre longitudinales sont sensiblement perpendiculaires aux poutre circonférentielles ;
- la structure de porte comprend des butée de verrouillage, associées à une poutre longitudinale sur deux.

Dans la présente description et dans les revendications, l'adjectif « longitudinal » fait référence à la direction longitudinale du fuselage de l'aéronef. Les poutres longitudinales sont donc des poutres s'étendant sur la porte parallèlement à l'axe longitudinal dans lequel s'étend le fuselage de l'aéronef. De même, l'adjectif « circonférentiel » fait référence à la circonférence du fuselage de l'aéronef. Les poutres circonférentielles sont donc des poutres qui s'étendent suivant une courbe relative au contour d'une section du fuselage de l'aéronef. De même, la face interne du panneau de fuselage désigne la face qui est du côté de la cabine, par opposition à la face externe du panneau de fuselage qui est tournée vers l'extérieur.

Une telle porte assure sa rigidité sans avoir recours à des poutres se croisant. Les poutres qui sont agencées transversalement les unes aux autres viennent en contact, les extrémités d'une poutre contre le flanc d'une autre poutre, sans croisement. Les jonctions entre poutres sont ainsi simplifiées et l'assemblage de poutres réalisées au préalable est également simplifié. Cette disposition est particulièrement propice à la réalisation en matériaux composites.

L'invention permet par ailleurs l'emploi de plusieurs techniques de fabrication, différents matériaux et techniques de mise en oeuvre pouvant être employés pour la même porte. La simplicité de la conception permet de mettre en oeuvre efficacement la majorité des techniques utilisées dans la construction aéronautique, et d'envisager des technologies trop complexes pour une structure à poutre croisée de l'art antérieur.

Malgré sa simplicité d'assemblage, la porte présente une grande rigidité permettant au panneau de fuselage de contenir d'importantes différences de pression entre l'intérieur et l'extérieur de la cabine.

L'armature intérieure procure par ailleurs des propriétés de redondance mécanique à la structure de porte en rendant solidaires les faces intérieures de chaque poutre longitudinale d'un autre élément tel que les poutres longitudinales voisines et/ou les poutres circonférentielles, et ce du côté intérieur c'est à dire sur les faces de ces poutres qui sont situées vers l'intérieur de la cabine de l'aéronef. Cette redondance mécanique contribue à l'obtention du haut niveau de sécurité requis dans le domaine de l'aéronautique en garantissant qu'une défaillance, telle qu'une casse de poutre longitudinale, soit contenue par d'autres éléments, sans déformation détrimentale de la structure de porte et donc sans impact négatif sur la capacité du panneau de fuselage à supporter la différence de pression entre l'intérieur et l'extérieur de la cabine.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] La figure 1 représente en perspective une porte d'aéronef selon un premier mode de réalisation de l'invention ;
[Fig.2] La figure 2 représente en coupe verticale la porte de la figure 1 ;
[Fig.3] La figure 3 représente le profil des poutres longitudinales de la porte des figures 1 et 2 ;
[Fig.4] La figure 4 illustre une variante pour le profil de la figure 3 ;
[Fig.5] La figure 5 illustre une autre variante pour le profil de la figure 3 ;
[Fig.6] La figure 6 est une vue de détail de la figure 1 ;
[Fig.7] La figure 7 représente en perspective une porte d'aéronef selon un deuxième mode de réalisation de l'invention ;
[Fig.8] La figure 8 est une vue de détail de la figure 7 ;
[Fig.9] La figure 9 illustre une première variante de liaison entre les extrémités des poutres longitudinales et les poutres circonférentielles ;
[Fig.10] La figure 10 illustre une deuxième variante de liaison entre les extrémités des poutres longitudinales et les poutres circonférentielles ;
[Fig.11] La figure 11 illustre une troisième variante de liaison entre les extrémités des poutres longitudinales et les poutres circonférentielles.

### DESCRIPTION DÉTAILLÉE

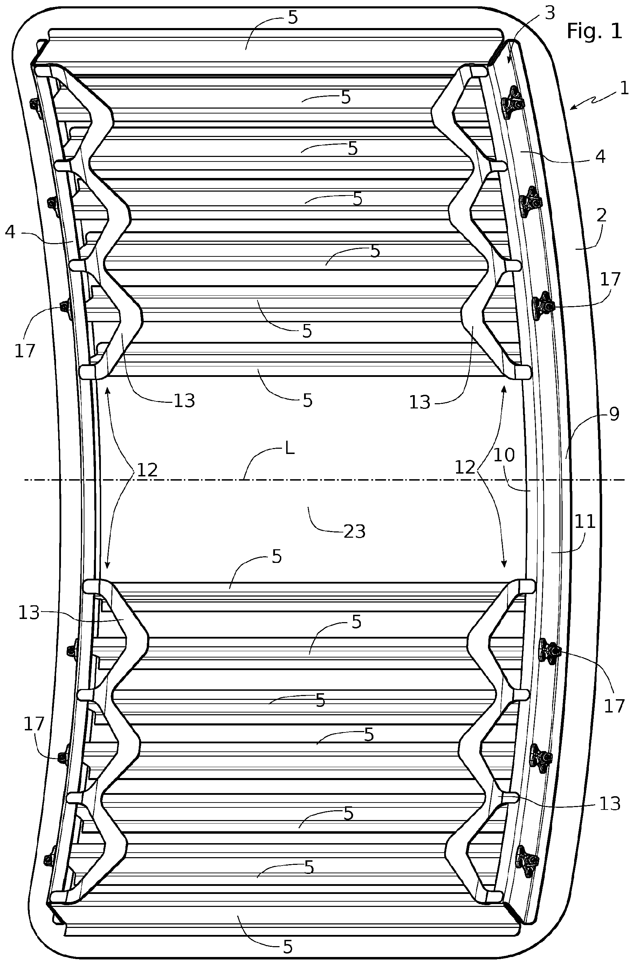

La figure 1 illustre en perspective une porte 1 de cabine pressurisée d'aéronef, selon un premier mode de réalisation de l'invention. Dans le présent exemple, cette porte 1 est destinée à fermer une ouverture correspondante pratiquée dans le fuselage d'un avion. La porte 1 peut s'ouvrir lorsque l'avion est au sol pour permettre l'entrée et la sortie de passagers, pour constituer une sortie de secours, une trappe d'accès aux soutes, ou tout autre panneau ouvrant pour avion. La porte 1 de cabine est associée de manière classique à des mécanismes de charnière, de commandes d'ouverture et de fermeture, ainsi qu'à des dispositifs d'étanchéité (non représentés).

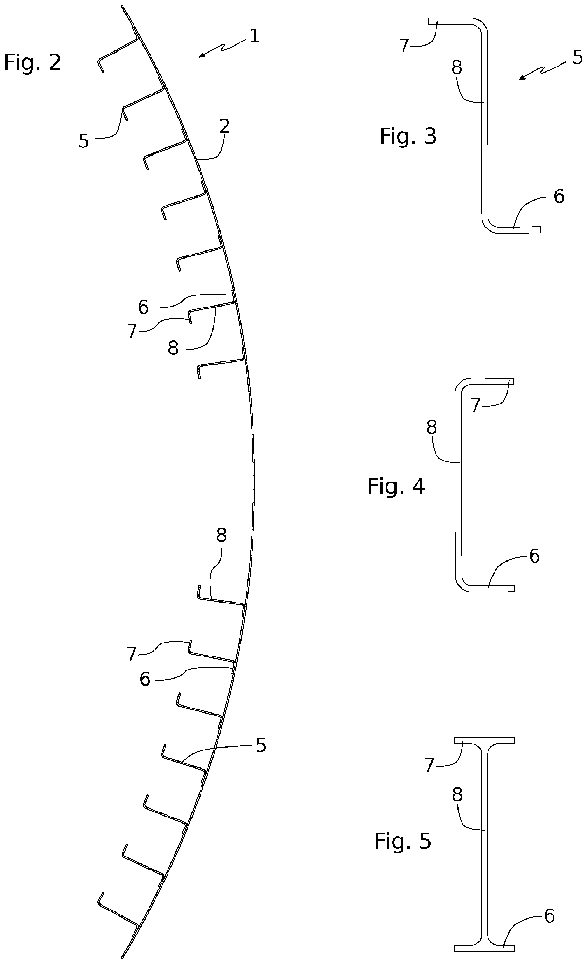

La porte 1 de cabine comprend un panneau de fuselage 2 et une structure 3 de porte qui renforce la tenue du panneau de fuselage 2. Lorsque la porte 1 de cabine est fermée, le panneau de fuselage 2 constitue la surface externe de l'avion, dans le prolongement du fuselage. Le panneau de fuselage 2 peut être par exemple réalisé à partir d'une tôle d'aluminium de 2 à 5 millimètres d'épaisseur. Dans le présent exemple, le panneau de fuselage 2 présente une courbure (voir figure 2) qui suit la forme du fuselage de l'avion dont la section est généralement sensiblement circulaire.

La structure 3 de porte est fixée sur la partie interne du panneau de fuselage 2, c'est-à-dire du côté de l'intérieur de la cabine de l'avion. La structure 3 de porte comprend deux poutres circonférentielles 4 qui sont fixées au panneau de fuselage 2 sur les rebords latéraux de la porte 1. Les poutres circonférentielles 4 suivent la courbure circonférentielle du panneau de fuselage 2, et plus généralement du fuselage de l'avion. Dans l'exemple décrit, les poutres circonférentielles 4 sont des poutres verticales (en référence à la position représentée à la figure 1), chacune étant fixée à proximité d'un rebord latéral du panneau de fuselage 2.

La structure 3 de porte comprend également une pluralité de poutres longitudinales 5 qui s'étendent dans la direction longitudinale L du fuselage de l'avion c'est-à-dire, en référence à la position de la figure 1, sensiblement horizontalement. Chaque poutre longitudinale 5 comporte une première extrémité venant au contact de l'une des poutres circonférentielles 4, et comporte une seconde extrémité qui vient au contact de l'autre poutre circonférentielle 4. Chaque poutre longitudinale 5 s'étend ainsi perpendiculairement aux poutres circonférentielles 4, d'une poutre circonférentielle 4 à l'autre. Les poutres longitudinales 5 sont ici toutes parallèles entre elles et s'étendent suivant une direction parallèle à une direction longitudinale L qui est perpendiculaire aux deux poutres circonférentielles 4. En variante, chaque poutre longitudinale 5 s'étend simplement transversalement aux poutres circonférentielles 4 car, dans certain cas, la porte 1 est montée dans des zones évolutives ou les poutres longitudinales ne sont pas perpendiculaires aux poutres circonférentielles et ne sont pas parallèles entre elles. Chaque âme de poutre longitudinale est reliée à l'âme de la poutre circonférentielle par des moyens de reprise en cisaillement décrits ci-après selon deux modes de réalisation, un premier mode de réalisation visant l'ajout d'un angle additionnel de reprise d'effort, et un deuxième mode de réalisation visant la fixation d'un pli de la poutre longitudinale sur la circonférentielle.

En référence à figure 2 qui illustre la porte 1 de profil en coupe verticale, les poutres longitudinales 5 sont des profilés ouverts présentant une face extérieure 6 sur laquelle est fixé le panneau de fuselage 2 et une face intérieure 7 qui est tournée vers l'intérieur de la cabine.

La figure 3 représente le profil de l'une des poutres longitudinales 5. La face intérieure 7 et la face extérieure 6 sont ici parallèles et sont reliées par une âme 8 constituée d'une paroi unique s'étendant perpendiculairement à la surface du panneau de fuselage 2. Dans le présent exemple, les poutres longitudinales 5 sont des profilés tels que ceux de la figure 3.

Les figures 4 et 5 illustrent des variantes de réalisation du profil des poutres longitudinales 5, applicable à tout les modes de réalisation. Bien que, selon ces variantes, les profilés présentent une forme différente, ils comportent les mêmes élément constitutifs qui sont identifiés avec les mêmes numéros de renvois aux figures. D'autres profilés ouverts présentant une face extérieure et une face intérieure sensiblement parallèles peuvent bien entendus être utilisés.

Dans la présente description et les revendications, l'expression « profilé ouvert » désigne un profilé ne comportant pas, en section, d'espace fermé. Un tube de section circulaire ou rectangulaire n'est à ce titre pas un profilé ouvert, tandis que des profilés dont la section est en U, en V, ou en T, sont des exemples de profilés ouverts. Ces profilés ouverts présentent l'avantage de permettre un accès sous tout cotés et d'être donc inspectables lors d'opérations de maintenance et de contrôle, ce qui renforce la sécurité et les possibilité de contrôle du vieillissement de la porte.

En référence à la figure 1, les poutres circonférentielles 4 sont également réalisées par des profilés ouverts comportant une face extérieure 9 et une face intérieure 10 parallèles. Ces faces 9, 10 sont reliées par une âme 11. Dans le présent exemple, les poutres circonférentielles 4 présentent un profil, c'est à dire une section, identique à celui des poutres longitudinales 5 (voir figure 3).

Le panneau de fuselage 2 est fixé, par exemple par collage, soudage ou tout autre procédé, sur la face extérieure 6 de chaque poutre longitudinale 5 et sur la face extérieure 9 de chaque poutre circonférentielle 4.

Par ailleurs, la face intérieure 10 des poutres circonférentielles 4 est en contact avec la face intérieure 7 de chaque poutre longitudinale 5. Les faces intérieures 10 des poutres circonférentielles 4 sont de préférence fixées aux poutres longitudinales 5 au niveau de cette zone de contact. La face intérieure 10 des poutres circonférentielles 4 constitue ainsi une nervure de renfort reliant, sur chaque rebord latéral de la porte, toutes les extrémités des poutres longitudinales 5 au niveau de leur face intérieure 7.

La structure 3 de porte comprend de plus une armature intérieure 12 de reprise d'efforts. Dans l'exemple de la figure 1, l'armature 12 est constituée d'une pluralité de montants 13 s'étendant chacun en vis à vis d'une poutre circonférentielle 4. Plus précisément, dans l'exemple de la figure 1, l'armature 12 comporte quatre montants 13, deux de ces montants 13 étant disposés en vis à vis de l'une des poutres circonférentielles 4 et deux autres de ces montants 13 étant disposé en vis à vis de l'autre poutre circonférentielle 4.

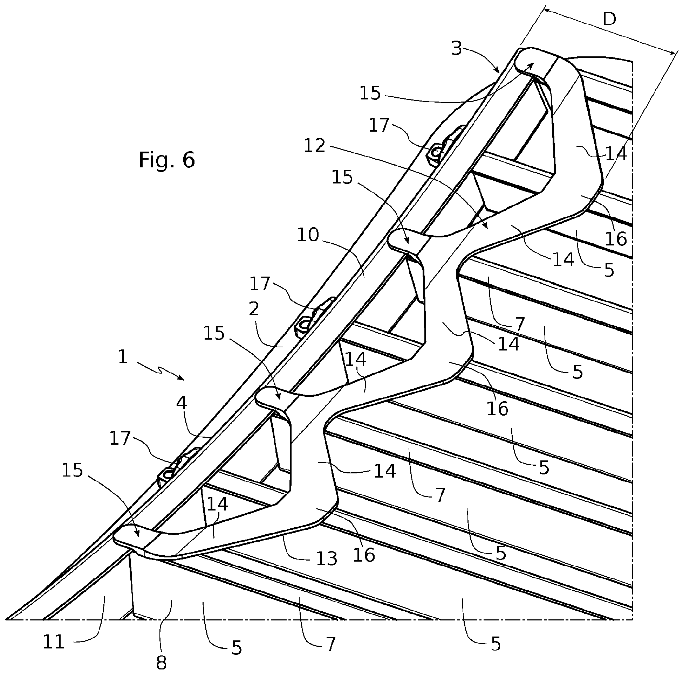

La figure 6 est une vue de détail de la figure 1 montrant l'un des montant 13. Chaque montant 13 comporte une pluralité de tirants 14 s'étendant chacun suivant une direction oblique par rapport à la direction longitudinale L. L'orientation des tirants 14 est qualifiée d'oblique dans la mesure où chaque tirant 14 forme avec la direction longitudinale L un angle compris entre 30 et 60 degré, et de préférence 45 degré.

De plus, les montants 13 sont agencés en zigzag c'est à dire que les tirants 14 sont disposés en dents de scie. Les extrémités des tirants 14 se rejoignent donc deux à deux, soit contre la poutre circonférentielle, soit à distance de cette poutre circonférentielle, alternativement.

Chaque tirant 14, qui est donc disposé en vis-à-vis d'une poutre circonférentielle 4, comporte ainsi une première zone d'extrémité 15 qui est à la fois fixée sur la face intérieure 10 de la poutre circonférentielle 4 et à la fois fixée sur la face intérieure 7 d'une première poutre longitudinale 5. Chaque tirant 14 comporte de plus une deuxième zone d'extrémité 16 qui est fixée sur la face intérieure 7 d'une poutre longitudinale 5 voisine de ladite première poutre longitudinale 5. La structure en dents de scie des montants 13 implique que la première zone d'extrémité 15 de chaque tirant 14 soit en contact avec la poutre circonférentielle 4 tandis que la deuxième zone d'extrémité 16 se trouve à une distance D de cette poutre circonférentielle 4. Cette distance D est ici définie comme étant la distance entre l'âme 11 de la poutre circonférentielle 4 et le rebord des tirants 14 qui se rejoignent dans leurs deuxième zone d'extrémité 16. Cette distance D est par exemple de l'ordre de 10 centimètres dans le cas d'une porte d'avion.

La fixation de l'armature intérieure 12 sur les poutres 4, 5 de la structure 3 de porte est réalisée par collage soudage ou tout autre moyen adapté.

L'invention se prête particulièrement, mais non exclusivement, à la réalisation de la structure 3 de porte en matériaux composites. Les montants 13 assurent un blocage en flexion de ces extrémités des poutres longitudinales 5. L'armature intérieure 12 permet la reprise d'effort de la face intérieure des poutres longitudinales 5 sur la partie interne de la structure 3 de porte tandis que les efforts exercés par le panneau de fuselage 2 sur la partie externe de la structure 3 de porte sont eux repris directement par la fixation du panneau de fuselage 2 sur la structure 3 de porte. Cette reprise d'effort sur la surface intérieure des poutres longitudinales permet de distribuer les efforts entre les poutres longitudinales. Le maintien du panneau de fuselage 2 compatible avec les conditions de vol, cabine sous pression, est ainsi obtenu avec une structure légère et pouvant être réalisée au moins partiellement en matériaux composites, selon un procédé simplifié.

Selon une caractéristique préférée, l'âme 8 des poutres longitudinales 5 est fixée à l'âme 11 des poutres circonférentielles 4.

La porte 1 est de plus équipée de butées 17 fixées latéralement sur l'âme 11 des poutres circonférentielles 4. Ces butées 17 constituent des ferrures de reprise sur le fuselage et permettent le verrouillage de la porte 1 en position fermée lors du vol. Dans le présent exemple, certaines poutres longitudinales 5, ci-après dénommées « poutres 5 de verrouillage », sont associées à une paire de butées 17, chaque butée 17 étant disposée en vis-à-vis d'une extrémité de la poutre 5 de verrouillage. Ainsi, chaque butée 17 est fixée sur l'âme 11 d'une poutre circonférentielle 4 au niveau où l'extrémité d'une poutre 5 de verrouillage est située.

D'autres poutres longitudinales 5, ci-après dénommées « poutres 5 libres », ne sont pas associées à des butées 17.

La structure 3 de porte est montée de sorte que les poutres 5 libres alternent avec les poutres 5 de verrouillage.

Les poutres 5 de verrouillage sont les poutres sur lesquelles les deuxièmes zones d'extrémité 16 des tirants 14 sont fixés, à la distance D. Les poutres 5 libres sont donc quant à elles les poutres sur lesquelles sont fixées les premières zones d'extrémité 15 des tirants 14. La plupart des poutres 5 libres sont ainsi entourées de deux poutres 5 de verrouillage. Les efforts de flexion s'exerçant sur une poutre 5 libre sont ainsi repris obliquement par les tirants 14 en direction d'une zone (les deuxièmes zones d'extrémité 16 des tirants 14) située à distance la distance D de chaque butée 17.

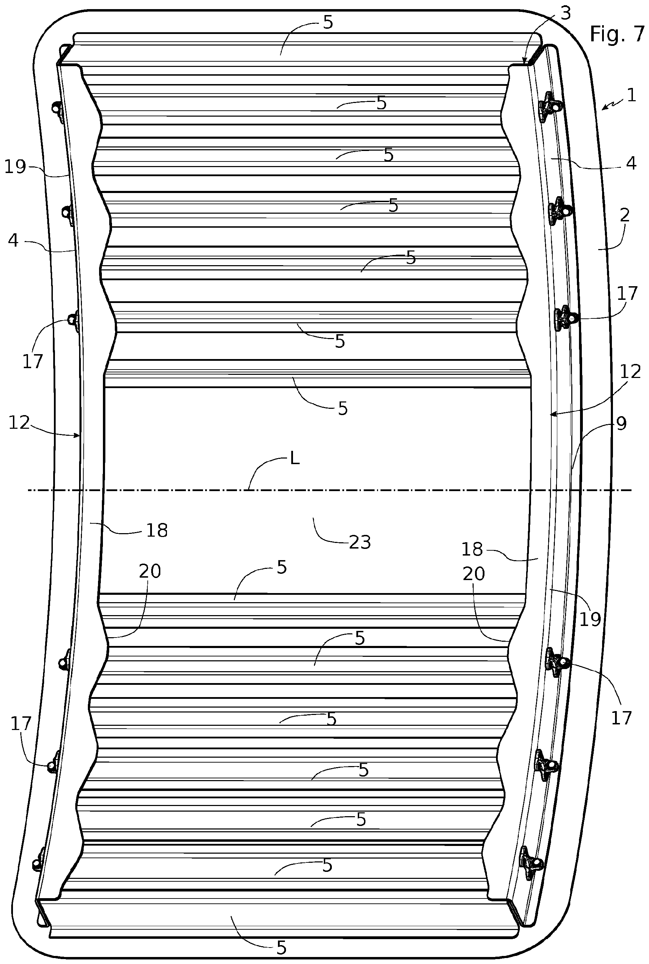

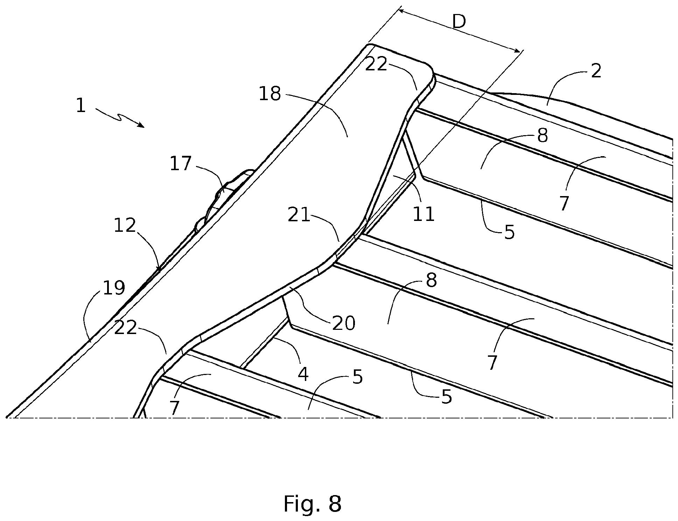

Les figures 7 et 8 sont similaires aux figures 1 et 6 et illustrent un deuxième mode de réalisation de l'invention. Les éléments communs au premier et au deuxième mode de réalisation portent les mêmes numéros de renvoi aux figures. La structure 3 de porte est ici munie, de même que précédemment, de poutres longitudinales 5 constituées par des profilés ouverts (Exemples à la figure 3 à 5) s'étendant entre deux poutres circonférentielles 4 sur lesquelles sont fixées des butées 17 en alternance relativement à des poutres 5 libres et à des poutres 5 de verrouillage.

Selon ce deuxième mode de réalisation, l'armature 12 intérieure de reprise d'effort est constituée par un pli des poutres circonférentielles 4. Les poutres circonférentielles 4 sont ici réalisées également à partir d'un profilé ouvert comportant une face extérieure 9 et une âme 11 tandis qu'un pli forme une corniche 18 qui constitue la face intérieure de la poutre circonférentielle 4. La corniche 18 s'étend parallèlement à la face extérieure 9 de la poutre circonférentielle 4, c'est à dire que la corniche 18 suit la même courbure que la face extérieure 9 à distance de cette face extérieure 9. La face extérieure 9 peut être repliée sur le panneau de fuselage 2 vers l'extérieur de la porte (comme représenté) ou, en variante, vers l'intérieur de la porte.

Les poutres circonférentielles 4 étant courbes pour suivre la forme du fuselage de l'avion, la notion de parallélisme entre les faces intérieures 10 et extérieures 9 des poutres circonférentielles 4 est relative au fait que ces faces 9,10 suivent la même courbure et s'étendent en vis à vis l'une de l'autre avec une distance constante.

Les deux plis 18 constituent deux corniches formant l'armature 12. Ces corniches présentant un premier rebord 19 droit et un deuxième rebord 20 ondulé (voir figure 8).

Le rebord droit 19 est qualifié de droit car il s'étend selon une ligne ne présentant pas de courbure dans la direction longitudinale L (la seule courbure du rebord droit 19 est la courbure circonférentielle de la poutre circonférentielle 4 correspondant). Le rebord ondulé 20 est qualifié d'ondulé car il s'étend selon une ligne qui ondule entre proximité et éloignement par rapport à l'âme 11 de la poutre circonférentielle 4. Le rebord ondulé 20 comporte ainsi des zones dénommées « zones de bosses 21 » qui sont éloignées de l'âme 11, et des zones dénommées « zones de creux 22 » qui sont proches de l'âme 11.

La corniche 18 est fixée sur la face intérieure 7 des poutres longitudinales 5 dans les zones de bosses 21 et dans les zones de creux 22.

La distance entre les zones de creux 22 et l'âme 11 correspond sensiblement à la largeur 10 des poutres circonférentielles 4 du premier mode de réalisation. De même, la distance D entre les zones de bosses 21 et l'âme 11 correspond à la distance D entre l'âme 11 et la deuxième zone d'extrémité 16 des tirants 14 du premier mode de réalisation.

Dans ce deuxième mode de réalisation, la reprise d'effort oblique est ainsi réalisée par la corniche 18 avec les mêmes propriétés mécaniques et les mêmes avantages que le premier mode de réalisation.

Les poutres longitudinales 5 sur lesquelles sont fixées les zones de bosses 21 sont également des poutres 5 de verrouillage, c'est à dire qu'elles sont associées aux butées de verrouillage 17. Les poutres longitudinales 5 sur lesquelles sont fixées les zones de creux 22 sont également des poutres 5 libres, c'est à dire qu'elles ne sont pas associées aux butées de verrouillage 17.

En référence aussi bien au premier mode de réalisation qu'au deuxième mode de réalisation, l'invention permet de réaliser la structure 3 de porte avec une pluralité d'ensembles de poutres longitudinales 5 dont chaque ensemble présente le même pas, c'est-à-dire le même écartement entre les poutres 5. Dans les exemples illustrés, il y a deux ensembles de poutres longitudinales 5 (un ensemble supérieur de sept poutres 5 et un ensemble inférieur de sept poutres 5, voir figures 1 et 7), ces ensembles étant séparés par un espace 23 permettant d'y loger des équipements de porte et dispositifs divers. Le pas des poutres 5 au sein de chaque groupe peut être adapté à l'appui souhaité pour le panneau de fuselage.

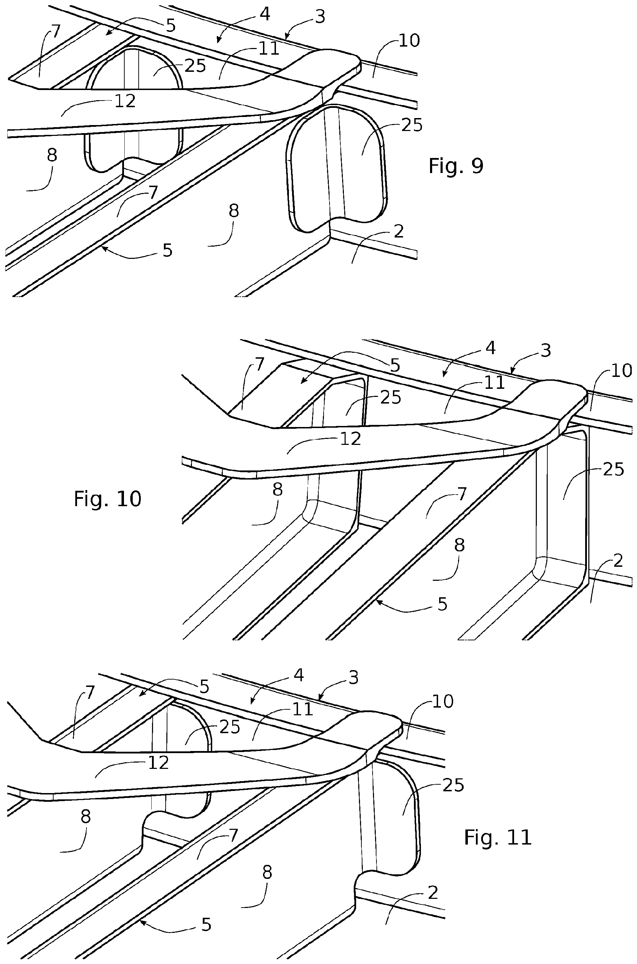

Par ailleurs, quel que soit le mode de réalisation de l'armature intérieure de reprise d'efforts, la porte peut, en complément, comporter une liaison mécanique entre les extrémités des poutres longitudinales et les poutres circonférentielles. Les figures 9 à 11 illustrent trois variantes d'une telle liaison mécanique 25. Les éléments des figures 9 à 11 qui sont communs avec des éléments précédemment décrits portent les mêmes numéros de renvoi aux figures. Ces trois variantes sont illustrées dans le contexte du deuxième mode de réalisation décrit précédemment (ce deuxième mode de réalisation illustre l'exemple où l'armature intérieure est réalisée par des tirants 14). Cependant, ces trois variantes sont applicables au premier mode de réalisation décrit précédemment ou à tout autre mode de réalisation de l'armature extérieure.

En référence à la figure 9, la liaison mécanique 25 est réalisée par une pluralité de cornières rapportées, chacune reliant l'âme 8 d'une poutre longitudinale 5, au niveau de chaque extrémité de la poutre longitudinale 5, à l'âme 11 d'une poutre circonférentielle 4. Ces cornières peuvent être fixées aux poutres 4, 5 par tous moyens tels que collage, soudage, etc.

En référence à la figure 10, les poutres longitudinales 5 sont ici des poutres dont le profil est illustré figure 4. La liaison mécanique 25 entre les poutres 4, 5 est ici réalisée par un rebord 25 situé à chaque extrémité des poutres longitudinales 5, ce rebord 25 étant placé dans la continuité des faces extérieures 6 et des faces intérieures 7 des poutres longitudinales 5. Chaque rebord 25 est fixé à la poutre circonférentielle 4 correspondante.

En référence à la figure 11, la liaison mécanique 25 entre les poutres 4, 5 est ici réalisée par un pli 25 situé à chaque extrémité de l'âme 8 des poutres longitudinales 5, ce pli 25 étant fixé à la poutre circonférentielle 4 correspondante.

Des variantes de réalisation de la structure 3 de porte et notamment de l'armature 12 intérieure de reprise d'effort peuvent être envisagées sans sortir du cadre de l'invention. Notamment, l'armature 12 peut être constituée par tout assemblage mécanique permettant cette reprise d'effort sur la face intérieure 7 des poutres longitudinales 5, par exemple par des bras métalliques disposés obliquement entre les poutres longitudinales 5 et vissés sur ces poutres.

## Revendications

1. Porte (1) de cabine pressurisée d'aéronef, comportant un panneau (2) de fuselage et une structure (3) de porte qui comprend :
- deux poutres circonférentielles (4) disposées sur les rebords latéraux de la porte (1) ;
- une pluralité de poutres longitudinales (5) disposées entre les poutres circonférentielles (4) selon une direction longitudinale (L), chaque poutre longitudinale (L) étant un profilé ouvert s'étendant d'une poutre circonférentielle (4) à l'autre, le panneau de fuselage (2) étant fixé sur les poutres longitudinales (5) ;
- une armature intérieure (12) de reprise d'efforts ;
cette porte (1) étant **caractérisée en ce que** chaque poutre longitudinale (5) présente une face extérieure (6) sur laquelle est fixé le panneau (2) de fuselage et une face intérieure (7), tournée vers l'intérieur de la cabine, la face intérieure (7) et la face extérieure (6) étant sensiblement parallèles, et **en ce que** l'armature intérieure (12) de reprise d'efforts est fixée sur la face intérieure (7) de chaque poutre longitudinale (5) et comporte une pluralité de montants (13) s'étendant chacun en vis-à-vis d'une poutre circonférentielle (4), chaque montant (13) étant fixé sur plusieurs poutres longitudinales (5).

2. Porte selon la revendication 1, **caractérisée en ce que** l'armature intérieure (12) de reprise d'efforts relie la face intérieure (7) de chaque poutre longitudinale (5) à la face intérieure (7) de la poutre longitudinale (5) voisine.

3. Porte selon l'une quelconque des revendications précédentes, **caractérisée en ce que** les deux poutres circonférentielles (4) sont des profilés ouverts présentant une face extérieure (9) sur laquelle est fixé le panneau (2) de fuselage et une face intérieure (10), tournée vers l'intérieur de la cabine, la face intérieure (10) et la face extérieure (9) étant sensiblement parallèles.

4. Porte selon la revendication 3, **caractérisée en ce que** les poutres longitudinales (5) et les poutres circonférentielles (4) comportent chacune une âme (8, 11), l'âme (8) des poutres longitudinales (5) étant fixée à l'âme (11) des poutres circonférentielles (4).

5. Porte selon la revendication 4, **caractérisée en ce qu'**elle comporte une liaison mécanique (25) entre chaque extrémité des poutres longitudinales (5) et une poutre circonférentielle (4).

6. Porte selon l'une des revendications 3 à 5, **caractérisée en ce que** l'armature intérieure (12) de reprise d'efforts relie la face intérieure (7) de chaque poutre longitudinale (5) à la face intérieure (10) d'une poutre circonférentielle (4).

7. Porte selon l'une des revendications précédentes, **caractérisée en ce que** chacun des montants (13) comporte une pluralité de tirants (14) s'étendant chacun suivant une direction oblique par rapport à la direction longitudinale (L).

8. Porte selon la revendication 7, **caractérisée en ce que** la direction oblique forme un angle compris entre 30° et 60° avec la direction longitudinale (L).

9. Porte selon l'une des revendications 7 ou 8, **caractérisée en ce que** les tirants (14) sont disposés en dents de scie.

10. Porte selon la revendication 9, **caractérisée en ce que** les tirants (14) comportent chacun une première zone d'extrémité (15) et une deuxième zone d'extrémité (16), les tirants (14) étant reliés entre eux deux à deux de sorte que :
- deux tirants (14) sont reliés par leur première zone d'extrémité (15) contre la poutre circonférentielle en vis-à-vis de laquelle s'étend le montant (13) correspondant ;
- deux tirants (14) sont reliés par leur deuxième zone d'extrémité (16) à une distance (D) de la poutre circonférentielle en vis-à-vis de laquelle s'étend le montant (13) correspondant.

11. Porte selon l'une des revendications 7 à 10, **caractérisée en ce que** chacun des tirants (14) s'étend entre un point de fixation sur une poutre longitudinale (5) et un autre point de fixation sur une poutre circonférentielle (4).

12. Porte selon l'une des revendications 7 à 11, **caractérisée en ce que** chacun des tirants (14) s'étend entre un point de fixation sur une poutre longitudinale (5) et un autre point de fixation sur une poutre longitudinale voisine (5).

13. Porte selon l'une quelconque des revendications 1 à 6, **caractérisée en ce que** l'armature intérieure (12) de reprise d'efforts comporte une pluralité de corniches (18) comportant chacune un premier rebord (19) fixé à l'une des poutres circonférentielles (4) et un deuxième rebord ondulé (20).

14. Porte selon la revendication 13, **caractérisée en ce que** les corniches (18) présentent chacune une succession de zones de bosses (21) et de zones de creux (22) fixées en alternance sur la face intérieure (7) des poutres longitudinales (5).

15. Porte selon l'une des revendications 13 ou 14, **caractérisée en ce que** les poutres circonférentielles (4) comportent une face intérieure formant les corniches (18).

16. Porte selon l'une quelconque des revendications précédentes, **caractérisée en ce que** la structure (3) de porte comprend un premier ensemble de poutres longitudinales (5) et un deuxième ensemble de poutres longitudinales (5), les poutres longitudinales (5) étant espacées d'un pas identique dans chacun de ces ensembles.

17. Porte selon l'une quelconque des revendications précédentes, **caractérisée en ce que** les poutre longitudinales (5) sont sensiblement perpendiculaires aux poutre circonférentielles (4).

18. Porte selon l'une quelconque des revendications précédentes, **caractérisée en ce que** la structure (3) de porte comprend des butée de verrouillage (17), associées à une poutre longitudinale (5) sur deux.

## Patentansprüche

1. Tür (1) für eine Druckkabine eines Luftfahrzeugs mit einer Rumpfplatte (2) und einer Türstruktur (3), die Folgendes umfasst:
- zwei Umfangsträger (4), die an den seitlichen Rändern der Tür (1) angeordnet sind;
- mehrere Längsträger (5), die in einer Längsrichtung (L) zwischen den Umfangsträgern (4) angeordnet sind, wobei jeder Längsträger (L) ein offenes Profil ist, das sich von einem Umfangsträger (4) zum anderen erstreckt, wobei die Rumpfplatte (2) an den Längsträgern (5) befestigt ist;
- eine innere Bewehrung (12) zur Aufnahme von Kräften;
wobei die Tür (1) **dadurch gekennzeichnet ist, dass** jeder Längsträger (5) eine Außenseite (6), an der die Rumpfplatte (2) befestigt ist, und eine Innenseite (7), die zum Inneren der Kabine gerichtet ist, umfasst, wobei die Innenseite (7) und die Außenseite (6) im Wesentlichen parallel sind, und dass die innere Kraftaufnahmebewehrung (12) an der Innenseite (7) jedes Längsträgers (5) befestigt ist und mehrere Pfosten (13) aufweist, die sich jeweils gegenüber einem Umfangsträger (4) erstrecken, wobei jeder Pfosten (13) an mehreren Längsträgern (5) befestigt ist.

2. Tür nach Anspruch 1, **dadurch gekennzeichnet, dass** die innere Kraftaufnahmebewehrung (12) die Innenseite (7) jedes Längsträgers (5) mit der Innenseite (7) des benachbarten Längsträgers (5) verbindet.

3. Tür nach einem der vorangehenden Ansprüche, **dadurch gekennzeichnet, dass** die beiden Umfangsträger (4) offene Profile sind, die eine Außenseite (9), an der die Rumpfplatte (2) befestigt ist, und eine Innenseite (10), die zum Inneren der Kabine gerichtet ist, aufweist, wobei die Innenseite (10) und die Außenseite (9) im Wesentlichen parallel sind.

4. Tür nach Anspruch 3, **dadurch gekennzeichnet, dass** die Längsträger (5) und die Umfangsträger (4) jeweils einen Steg (8, 11) aufweisen, wobei der Steg (8) der Längsträger (5) am Steg (11) der Umfangsträger (4) befestigt ist.

5. Tür nach Anspruch 4, **dadurch gekennzeichnet, dass** sie eine mechanische Verbindung (25) zwischen jedem Ende der Längsträger (5) und einem Umfangsträger (4) aufweist.

6. Tür nach einem der Ansprüche 3 bis 5, **dadurch gekennzeichnet, dass** die innere Kraftaufnahmebewehrung (12) die Innenseite (7) jedes Längsträgers (5) mit der Innenseite (10) eines Umfangsträgers (4) verbindet.

7. Tür nach einem der vorangehenden Ansprüche, **dadurch gekennzeichnet, dass** jeder der Pfosten (13) mehrere Zugstangen (14) aufweist, die sich jeweils in einer zur Längsrichtung (L) schrägen Richtung erstrecken.

8. Tür nach Anspruch 7, **dadurch gekennzeichnet, dass** die schräge Richtung einen Winkel zwischen 30° und 60° mit der Längsrichtung (L) ausbildet.

9. Tür nach einem der Ansprüche 7 oder 8, **dadurch gekennzeichnet, dass** die Zugstangen (14) sägezahnförmig angeordnet sind.

10. Tür nach Anspruch 9, **dadurch gekennzeichnet, dass** die Zugstangen (14) jeweils einen ersten Endbereich (15) und einen zweiten Endbereich (16) aufweisen, wobei die Zugstangen (14) paarweise miteinander verbunden sind, sodass:
- zwei Zugstangen (14) mit ihrem ersten Endbereich (15) gegen den Umfangsträger, dem gegenüber sich der entsprechende Pfosten (13) erstreckt, verbunden sind;
- zwei Zugstangen (14) mit ihrem zweiten Endbereich (16) in einem Abstand (D) zum Umfangsträger, dem gegenüber sich der entsprechende Pfosten (13) erstreckt, verbunden sind.

11. Tür nach einem der Ansprüche 7 bis 10, **dadurch gekennzeichnet, dass** sich jede der Zugstangen (14) zwischen einem Befestigungspunkt an einem Längsträger (5) und einem weiteren Befestigungspunkt an einem Umfangsträger (4) erstreckt.

12. Tür nach einem der Ansprüche 7 bis 11, **dadurch gekennzeichnet, dass** sich jede der Zugstangen (14) zwischen einem Befestigungspunkt an einem Längsträger (5) und einem weiteren Befestigungspunkt an einem benachbarten Längsträger (5) erstreckt.

13. Tür nach einem der Ansprüche 1 bis 6, **dadurch gekennzeichnet, dass** die innere Kraftaufnahmebewehrung (12) mehrere Gesimse (18) aufweist, die jeweils einen an einem der Umfangsträger (4) befestigten ersten Rand (19) und einen zweiten gewellten Rand (20) aufweisen.

14. Tür nach Anspruch 13, **dadurch gekennzeichnet, dass** die Gesimse (18) jeweils eine Folge von Ausbuchtungszonen (21) und Aussparungszonen (22) aufweisen, die abwechselnd an der Innenseite (7) des Längsträgers (5) befestigt sind.

15. Tür nach einem der Ansprüche 13 oder 14, **dadurch gekennzeichnet, dass** die Umfangsträger (4) eine Innenseite aufweisen, die die Gesimse (18) ausbildet.

16. Tür nach einem der vorangehenden Ansprüche, **dadurch gekennzeichnet, dass** die Türstruktur (3) einen ersten Satz von Längsträgern (5) und einen zweiten Satz von Längsträgern (5) aufweist, wobei die Längsträger (5) in jedem dieser Sätze mit einer identischen Teilung beabstandet sind.

17. Tür nach einem der vorangehenden Ansprüche, **dadurch gekennzeichnet, dass** die Längsträger (5) im Wesentlichen senkrecht zu den Umfangsträgern (4) sind.

18. Tür nach einem der vorangehenden Ansprüche, **dadurch gekennzeichnet, dass** die Türstruktur (3) Verriegelungsanschläge (17) umfasst, die mit jedem zweiten Längsträger (5) verbunden sind.

## Claims

1. An aircraft pressurized door (1) including a fuselage panel (2) and a door structure (3), which comprises:
- two circumferential beams (4) arranged on the lateral edges of the door (1);
- a plurality of longitudinal beams (5) arranged between the circumferential beams (4) in a longitudinal direction (L), each longitudinal beam (5) extending from one circumferential beam (4) to the other, the fuselage panel (2) being fixed to the longitudinal beams (5);
- this door (1) being **characterized in that** each longitudinal beam (5) is an open profile having an outer face (6) to which the fuselage panel (2) is fixed and an inner face (7), turned towards the inside of the cabin, the inner face (7) and the outer face (6) being substantially parallel, the door structure (3) further including an internal force-absorbing frame (12) fixed to the inner face (7) of each longitudinal beam (5), this internal force-absorbing frame (12) including a plurality of uprights (13) each extending opposite a circumferential beam (4), each upright (13) being fixed to several longitudinal beams (5).

2. The door as claimed in claim 1, **characterized in that** the internal force-absorbing frame (12) connects the inner face (7) of each longitudinal beam (5) to the inner face (7) of the neighboring longitudinal beam (5).

3. The door as claimed in either of the preceding claims, **characterized in that** the two circumferential beams (4) are open profiles having an outer face (9) to which the fuselage panel (2) is fixed and an inner face (10), turned towards the inside of the cabin, the inner face (10) and the outer face (9) being substantially parallel.

4. The door as claimed in claim 3, **characterized in that** the longitudinal beams (5) and the circumferential beams (4) each include a web (8, 11), the webs (8) of the longitudinal beams (5) being fixed to the webs (11) of the circumferential beams (4).

5. The door as claimed in claim 4, **characterized in that** it includes a mechanical connection (25) between each end of the longitudinal beams (5) and a circumferential beam (4).

6. The door as claimed in either one of claims 3 to 5, **characterized in that** the internal force-absorbing frame (12) connects the inner face (7) of each longitudinal beam (5) to the inner face (10) of a circumferential beam (4).

7. The door as claimed in one of the preceding claims, **characterized in that** each upright (13) includes a plurality of tie rods (14) each extending in an oblique direction with respect to the longitudinal direction (L).

8. The door as claimed in claim 7, **characterized in that** the oblique direction forms an angle between 30° and 60° with the longitudinal direction (L).

9. The door as claimed in either one of claims 7 or 8, **characterized in that** the tie rods (14) are arranged as saw teeth.

10. The door as claimed in claim 9, **characterized in that** the tie rods (14) each have a first end zone (15) and a second end zone (16), the tie rods (14) being connected together two by two, such that:
- two tie rods (14) are connected by their first end zone (15) against the circumferential beam opposite which the corresponding upright (13) extends;
- two tie rods (14) are connected by their second end zone (16) at a distance D from the circumferential beam opposite which the corresponding upright (13) extends.

11. The door as claimed in one of claims 7 to 10, **characterized in that** each tie rod (14) extends between a fastening point on a longitudinal beam (5) and another fastening point on a circumferential beam (4).

12. The door as claimed in one of claims 7 to 11, **characterized in that** each tie rod (14) extends between a fastening point on a longitudinal beam (5) and another fastening point on a neighboring longitudinal beam (5).

13. The door as claimed in any one of claims 1 to 6, **characterized in that** the internal force-absorbing frame (12) includes a plurality of cornices (18) each including a first edge (19) fixed to one of the circumferential beams (4) and a second undulated edge (20).

14. The door as claimed in claim 13, **characterized in that** each cornice (18) has a succession of zones of bumps (21) and zones of hollows (22) fixed alternately on the inner faces (7) of the longitudinal beams (5).

15. The door as claimed in either one of claims 13 or 14, **characterized in that** the circumferential beams (4) include an inner face forming the cornices (18).

16. The door as claimed in any one of the preceding claims, **characterized in that** the door structure (3) comprises a first set of longitudinal beams (5) and a second set of longitudinal beams (5), the longitudinal beams (5) being spaced by a pitch identical in each of these sets.

17. The door as claimed in any one of the preceding claims, **characterized in that** the longitudinal beams (5) are substantially perpendicular to the circumferential beams (4).

18. The door as claimed in any one of the preceding claims, **characterized in that** the door structure (3) comprises locking stops (17) associated with one longitudinal beam (5) out of two.
